Europäisches Patentamt

European Patent Office  (11) Publication number:  **0 055 095**

Office européen des brevets  **B1**

(19)

(12)  **EUROPEAN PATENT SPECIFICATION**

(45) Date of publication of patent specification: **09.04.86**  (51) Int. Cl.⁴: **F 16 B 39/20**

(21) Application number: **81305950.8**

(22) Date of filing: **18.12.81**

(54) **Rotation restraint means for threaded nuts.**

(30) Priority: **19.12.80 GB 8040842**

(43) Date of publication of application:
**30.06.82 Bulletin 82/26**

(45) Publication of the grant of the patent:
**09.04.86 Bulletin 86/15**

(84) Designated Contracting States:
**AT BE CH DE FR GB IT LI LU NL SE**

(56) References cited:
**CH-A- 204 318
FR-A- 417 017
FR-A- 702 298
US-A-2 107 550
US-A-2 233 889
US-A-3 565 149**

(73) Proprietor: **PARSONS CONTROLS LIMITED
Stourport on Severn
Stourport Worcestershire DY13 9AT (GB)**

(72) Inventor: **Lacey, Roger Anthony
4 New Inn Lane
Shrawley Worcs. WR6 6TE (GB)**
Inventor: **Arnold, Edward James
36 Malvern Road
St. Johns Worcester, WR2 4LG (GB)**

(74) Representative: **Lewis, David Overington
c/o Babcock International Ltd. Cleveland House
19 St. James's Square
London SW1Y 4LN (GB)**

Courier Press, Leamington Spa, England.

## Description

This invention relates to nuts having threaded bores and rotation restraint means therefor and, more particularly, to rotation restraint means for use in conjunction with a locating nut on a wire wound conduit of a control cable.

In US—A—3 565 149 there is shown a nut having a threaded bore to co-act with an externally threaded member and having rotation restraint means comprising a coiled wire spring with a pitch and diameter corresponding to the thread of the bore, adapted to stiffly engage the thread convolutions of the member and to drivingly engage the nut and having end lengths of the wire bent out to extend radially outwards, the appropriate operation of which tends to unwind or loosen the spring. However, operation of the end lengths of the wire is either by hand or using a tool, which detracts from the convenience of the device.

The present invention provides that the nut has a recess formed in register with the threaded bore in an end portion of the nut adjacent an end face, the recess being formed with an inwardly directed lug, said spring being adapted to be accommodated in the recess with the end lengths of the wire respectively engageable with opposed faces of the lug in the recess to apply an unwinding torque to the spring upon rotation of the nut.

The invention will now be described, by way of example, with reference to the accompanying, partly diagrammatic, isometric, exploded drawing of a nut 2 and a coiled spring 14 on a wire wound conduit 4 of a control cable.

The locating nut 2 is moulded in acetal resin material provided internally with a bore having a thread form adapted to co-act with, and run freely on, convolutions formed in winding the wire wound conduit. Externally, the nut 2 is formed with a scalloped surface 6 generally co-axial of the bore to permit ease of manual rotation.

Adjacent one end face 8 of the nut an end portion of the bore is enlarged to form a recess 10 provided with an inwardly directed lug 12. A slightly less than two-turn coil spring 14 having convolutions adapted stiffly to engage the convolutions formed in winding the wire wound conduit 4 is formed with end lengths 16, 18 of the wire of the spring bent out to extend radially outwards.

To assemble the spring 14 and the nut 2 onto the wire wound conduit 4, the spring is first started on the convolutions of the conduit and then the recess 10 in the nut is positioned to encompass the spring and the nut rotated to thread the nut onto the conduit. The lug 12 in the recess bears against the bent out end length 16 of the spring 14 and thus tends to unwind or loosen the spring, thereby facilitating rotation of the spring. The nut and the spring are wound-on along the conduit to a desired location and the rotation force relaxed, whereupon the spring returns to a configuration stiffly engaging the conduit, thereby restraining rotation of the nut arising from, for example, vibration, by interaction between the bent-out end lengths 16, 18 and the lug 12 in the recess. If it is desired to rotate the nut in the opposite, or winding-off direction — that is, to move the nut toward the start end of the conduit, torque is applied to the nut to produce rotation in the required direction. The lug 12 engages the bent out end length 18 of the spring and thus tends to unwind or loosen the spring, thereby facilitating rotation of the spring along the conduit to a required location, whereupon the torque on the nut is relaxed and the spring returns to the configuration stiffly engaging the conduit.

A nut-running machine may be used to apply torque to the nut during an initial threading-on operation. For subsequent adjustments the nut is rotated manually.

It will be appreciated that the torque required to effect rotation is determined by the stiffness of the spring 14 and the number of turns of the spring and that either or both of these may be varied to produce a requisite resistance to rotation of the nut.

In other embodiments (not shown) the nut is formed with an elongation or nosing to fit into an aperture in a bracket or bulkhead.

It will be appreciated that whilst the foregoing description is concerned with restraining rotation of a nut on a wire wound conduit, other externally threaded members, such as bolts, may be utilised to co-act with the nut member and restraining spring and that, provided that the spring has an appropriate pitch, the thread form may be two, or more, start.

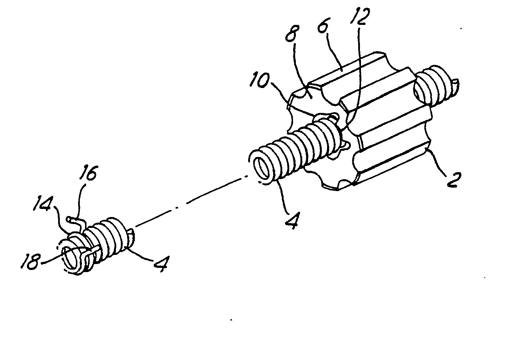

## Claims

1. A nut (2) having a threaded bore to co-act with an externally threaded member (4) and having rotation restraint means comprising a coiled wire spring (14) with a pitch and diameter corresponding to the thread of the bore, adapted to stiffly engage the thread convolutions of the member (4) and to drivingly engage the nut (2) and having end lengths (16, 18) of the wire bent out to extend radially outwards, the appropriate operation of which tends to unwind or loosen the spring (14), characterised in that the nut (2) has a recess (10) formed in register with the threaded bore in an end portion of the nut adjacent an end face (8), the recess being formed with an inwardly directed lug (12), said spring (14) being adapted to be accommodated in the recess (10) with the end lengths (16, 18) of the wire respectively engageable with opposed faces of the lug (12) in the recess (10) to apply an unwinding torque to the spring (14) upon rotation of the nut (2).

2. A nut as claimed in Claim 1, wherein the threaded bore of the nut is adapted to co-act with, and run freely on convolutions formed in winding a wire wound conduit (4).

3. A nut as claimed in Claim 1 or Claim 2, wherein the nut is formed of a plastics material and with a scalloped surface (6) generally co-axial of the bore adapted to facilitate manual rotation of the nut.

4. A nut as claimed in any preceding claim, wherein the coiled wire spring (14) is of slightly less than two turns.

## Revendications

1. Ecrou (2) présentant un alésage taraudé pour coopérer avec un élément fileté (4) et comportant un moyen d'empêchement de rotation constitué par un ressort en fil métallique enroulé (14) à pas et à diamètre correspondant aux filets de l'alésage, propre à porter fermement contre les circonvolutions de filets de l'élément (4) et à entrer en contact moteur avec l'écrou (2) et présentant des tronçons terminaux (16, 18) du fil métallique coudés en dehors pour s'étendre radialement vers l'extérieur, dont la manoeuvre appropriée tend à dérouler ou relâcher le ressort (14), caractérisé en ce que l'écrou (2) présente un évidement (10) ménagé en correspondance avec l'alésage taraudé dans un tronçon extrême de l'écrou près d'une face terminale (8), l'évidement présentant une oreille dirigée vers l'intérieur (12), ledit ressort (14) étant propre à être reçu dans l'évidement (10) avec possibilité pour les tronçons d'extrémité (16, 18) du fil métallique de porter respectivement contre des faces opposées de l'oreille (12) dans l'évidement (10) pour appliquer au ressort (14) un couple de déroulement lors de la rotation de l'écrou (2).

2. Ecrou selon la revendication 1, dans lequel l'alésage taraudé de l'écrou est propre à coopérer avec, et à se déplacer librement sur les circonvolutions formées en enroulant une gaine en fil métallique enroulé (4).

3. Ecrou selon la revendication 1 ou la revendication 2, dans lequel l'écrou est façonné en une matière plastique et présente une surface dentelée (6) dans l'ensemble coaxiale à l'alésage propre à faciliter la rotation manuelle de l'écrou.

4. Ecrou selon l'une quelconque des revendications précédentes, dans lequel le ressort en fil métallique enroulé (14) est d'un peu moins de deux spires.

## Patentansprüche

1. Eine Schraubenmutter (2) mit einer Gewindebohrung, die mit einem Teil (4), der mit einem Außengewinde versehen ist, zusammenwirkt, und die Mittel zur Verhinderung der Verdrehung aufweist, die eine gewundene Drahtfeder (14) mit einer Steigung und einem Durchmesser entsprechend der Schraubenwindung der Bohrung umfaßt, die dazu eingerichtet ist, die Schraubenwindungen des Teiles (4) fest zu umschließen und mit der Schraubenmutter. (2) zusammenzuwirken, und die radial nach außen gerichtete Enden (16, 18) des Drahtes aufweist, wobei deren passende Betätigung die Feder (14) abwinden oder lösen läßt, dadurch gekennzeichnet, daß die Schraubenmutter (2) eine der Gewindebohrung entsprechende Ausnehmung (10) aufweist, die in einem Endteil der Schraubenmutter anschließend an eine Begrenzungsfläche (8) vorgesehen ist, wobei die Ausnehmung einen nach innen gerichteten Ansatz (12) besitzt und die genannte Feder (14) dazu eingerichtet ist, von der Ausnehmung (10) mit den Drahtenden (16, 18) aufgenommen zu werden, die jeweils an den einander gegenüberliegenden Flächen des Ansatzes (12) in der Ausnehmung (10) eingreifen, um beim Verdrehen der Mutter (2) ein abwindendes Drehmoment auf die Feder (14) zu übertragen.

2. Eine Schraubenmutter nach Anspruch 1, wobei die Gewindebohrung dazu eingerichtet ist, mit Windungen, die durch eine Röhre (4) aus gewundenem Draht gebildet sind, zusammenzuwirken und sich frei auf ihnen zu verdrehen.

3. Eine Schraubenmutter nach Anspruch 1 oder 2, wobei die Schraubenmutter aus Kunststoff mit im allgemeinen koaxial zur Bohrung gerippter Oberfläche (6) gebildet ist, um ein Verdrehen der Schraubenmutter mit der Hand zu erleichtern.

4. Eine Schraubenmutter nach einem der vergehenden Ansprüche, wobei die schraubenförmig gewundene Drahtfeder (14) etwas weniger als zwei Windungen aufweist.